(19) Europäisches Patentamt
European Patent Office
Office européen des brevets

(11)  EP 4 786 293 A1

(12)  EUROPEAN PATENT APPLICATION
published in accordance with Art. 153(4) EPC

(43) Date of publication:
05.08.2026  Bulletin 2026/32

(51) International Patent Classification (IPC):
B60W 30/09 (2012.01)        B60W 30/10 (2006.01)
B60W 30/12 (2020.01)        B60W 30/095 (2012.01)
B60W 30/16 (2020.01)        G08G 1/16 (2006.01)
G08G 1/052 (2006.01)

(21) Application number: 23954085.9

(22) Date of filing: 29.12.2023

(86) International application number:
PCT/CN2023/143393

(87) International publication number:
WO 2025/065953 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority:  27.09.2023  CN 202311277440

(71) Applicant: VOYAH Automotive Technology Co.,
Ltd.
Wuhan, Hubei 430109 (CN)

(72) Inventors:
• CHENG, Ming
  Wuhan, Hubei 430050 (CN)
• LIU, Jifeng
  Wuhan, Hubei 430050 (CN)

• TU, Shengcai
  Wuhan, Hubei 430050 (CN)
• FU, Bin
  Wuhan, Hubei 430050 (CN)
• LU, Fang
  Wuhan, Hubei 430050 (CN)
• WANG, Junjun
  Wuhan, Hubei 430050 (CN)
• XIE, Wenyun
  Wuhan, Hubei 430050 (CN)
• LIU, Te
  Wuhan, Hubei 430050 (CN)
• TIAN, Dan
  Wuhan, Hubei 430050 (CN)
• JIANG, Minglong
  Wuhan, Hubei 430050 (CN)

(74) Representative: Bandpay & Greuter
11 rue Christophe Colomb
75008 Paris (FR)

(54) VEHICLE AVOIDANCE CONTROL METHOD AND APPARATUS, AND DEVICE AND STORAGE MEDIUM

(57)  A vehicle avoidance control method and apparatus, a device and a storage medium, where the method includes steps of: calculating, according to target vehicle information and lane line information, a distance from an edge of a target vehicle to an inner edge of a lane line of an ego vehicle, and determining whether the target vehicle needs to be avoided through the distance; when it is determined that the target vehicle needs to be avoided, calculating, according to the distance, a height of the target vehicle and a relative speed between the target vehicle and the ego vehicle, a timing for the ego vehicle to avoid the target vehicle; calculating a lateral distance for the ego vehicle to avoid the target vehicle based on a preset initial avoidance distance; and controlling, according to the timing and the lateral distance for the ego vehicle to avoid the target vehicle, the ego vehicle to perform intelligent avoidance.

Calculate, according to target vehicle information and lane line information, a distance from an edge of a target vehicle to an inner edge of a lane line of an ego vehicle, and determine whether the target vehicle needs to be avoided through the distance — Step S101

When it is determined that the target vehicle needs to be avoided, calculate a timing for the ego vehicle to avoid the target vehicle according to the distance, a height of the target vehicle and a relative speed between the target vehicle and the ego vehicle — Step S102

Calculate, based on a preset initial avoidance distance, a lateral distance for the ego vehicle to avoid the target vehicle — Step S103

Control, according to the timing and the lateral distance for the ego vehicle to avoid the target vehicle, the ego vehicle to perform intelligent avoidance — Step S104

FIG. 1

EP 4 786 293 A1

**Description**

**CROSS-REFERENCE TO RELATED APPLICATIONS**

The present application claims priority to Chinese Patent Application No. 202311277440.7, filed on September 27, 2023, which is hereby incorporated by reference in its entirety.

**TECHNICAL FIELD**

The present disclosure relates to the technical field of intelligent driving, and in particular, to a vehicle avoidance control method and apparatus, a device, and a storage medium.

**BACKGROUND**

After intelligent driving is activated, when an ego vehicle overtakes a large vehicle, it brings a sense of pressure to a driver, requiring an adaptive lateral offset to avoid the large vehicle. However, current intelligent driving functions on the market, when implementing avoidance, may exhibit phenomena such as avoidance timing being too late, low avoidance success rate, many unnecessary avoidances, and frequent driver takeovers, etc.

Most of the existing technologies currently determine whether a vehicle needs to be avoided and the avoidance timing through a lateral distance or a relative speed between two vehicles. A determination result of this avoidance scheme is not accurate, which is prone to false avoidance and missed avoidance, causing discomfort to the driver.

Therefore, how to improve accuracy of vehicle avoidance is a technical problem urgently needing to be solved currently.

**SUMMARY**

A main objective of the present disclosure is to provide a vehicle avoidance control method and apparatus, a device and a storage medium, which can adapt to different types of large vehicles and different road types, improve accuracy of avoidance, and also reduce the number of driver takeovers.

According to a first aspect of the present disclosure, a vehicle avoidance control method is provided, including: calculating, according to target vehicle information and lane line information, a distance from an edge of a target vehicle to an inner edge of a lane line of an ego vehicle, and determining whether the target vehicle needs to be avoided through the distance; when it is determined that the target vehicle needs to be avoided, calculating a timing for the ego vehicle to avoid the target vehicle according to the distance, a height of the target vehicle and a relative speed between the target vehicle and the ego vehicle; calculating a lateral distance for the ego vehicle to avoid the target vehicle based on a preset initial avoidance distance; and controlling the ego vehicle to perform intelligent avoidance according to the timing and the lateral distance for the ego vehicle to avoid the target vehicle.

According to a second aspect of the present disclosure, a vehicle avoidance control apparatus is provided, including: a deciding module, configured to calculate a distance from an edge of a target vehicle to an inner edge of a lane line of an ego vehicle according to target vehicle information and lane line information, and determine whether the target vehicle needs to be avoided through the distance; a calculating module, configured to, when it is determined that the target vehicle needs to be avoided, calculate a timing for the ego vehicle to avoid the target vehicle according to the distance, a height of the target vehicle and a relative speed between the target vehicle and the ego vehicle; calculate a lateral distance for the ego vehicle to avoid the target vehicle based on a preset initial avoidance distance; and a control module, configured to control the ego vehicle to perform intelligent avoidance according to the timing and the lateral distance for the ego vehicle to avoid the target vehicle.

According to a third aspect of the present disclosure, an electronic device is provided, the electronic device including: a processor; and a memory, storing computer-readable instructions thereon, where the computer-readable instructions, when executed by the processor, cause the processor to implement steps of the method according to any one of the first aspect.

According to a fourth aspect of the present disclosure, a computer-readable storage medium is provided, which stores computer program instructions, where when the computer program instructions are executed by a computer, the computer is caused to execute steps of the method according to any one of the first aspect.

It should be understood that the above general description and the following detailed description are merely exemplary and do not limit the present disclosure.

**BRIEF DESCRIPTION OF DRAWINGS**

The drawings herein are incorporated into the specification and constitute a part of the specification, illustrate embodiments consistent with the present disclosure, and together with the specification serve to explain the principles of the present disclosure.

FIG. 1 shows a flowchart of a vehicle avoidance control method according to some embodiments of the present disclosure.
FIG. 2 shows a schematic diagram of a vehicle avoidance control apparatus according to some embodiments of the present disclosure.
FIG. 3 shows a schematic diagram of an electronic device according to some embodiments of the present disclosure.
FIG. 4 shows a schematic diagram of a computer-readable program medium according to some embodiments of the present disclosure.

**DESCRIPTION OF EMBODIMENTS**

Exemplary embodiments will be described in detail here, with examples illustrated in the drawings. When the following description refers to the drawings, unless otherwise indicated, the same numerals in different drawings denote the same or similar elements. The implementations described in the following exemplary embodiments do not represent all implementations consistent with the present disclosure. Instead, they are merely examples of apparatuses and methods consistent with some aspects of the present disclosure as detailed in the appended claims.

Furthermore, the drawings are only schematic illustrations of the present disclosure and are not necessarily drawn to scale. Some block diagrams shown in the drawings are functional entities and do not necessarily correspond to physically or logically independent entities.

Embodiments of the present disclosure provide a vehicle avoidance control method and apparatus, a device and a storage medium, which can adapt to different types of large vehicles and different road types, improve the accuracy of avoidance, and also reduce the number of driver takeovers.

To achieve the above technical effects, the general idea of the present disclosure is as follows.
A vehicle avoidance control method, the method may include the following steps.

S101: Calculate, according to target vehicle information and lane line information, a distance from an edge of a target vehicle to an inner edge of a lane line of an ego vehicle, and determine whether the target vehicle needs to be avoided through the distance.

S102: When it is determined that the target vehicle needs to be avoided, calculate a timing for the ego vehicle to avoid the target vehicle according to the distance, a height of the target vehicle and a relative speed between the target vehicle and the ego vehicle.

S103: Calculate, based on a preset initial avoidance distance, a lateral distance for the ego vehicle to avoid the target vehicle.

S104: Control, according to the timing and the lateral distance for the ego vehicle to avoid the target vehicle, the ego vehicle to perform intelligent avoidance.

The embodiments of the present disclosure will be described in detail below with reference to the drawings.

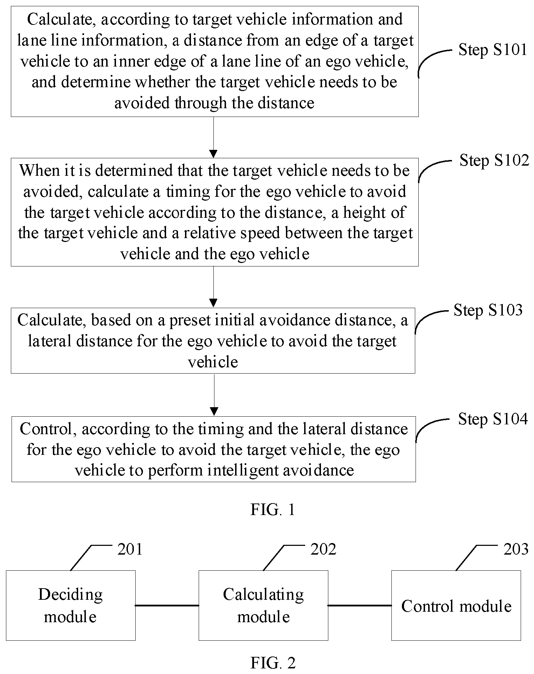

Referring to FIG. 1, FIG. 1 shows a flowchart of a vehicle avoidance control method according to some embodiments of the present disclosure. As shown in FIG. 1, the method may include steps S101 to S104.

In step S101, a distance from an edge of a target vehicle to an inner edge of a lane line of an ego vehicle is calculated according to target vehicle information and lane line information, and it is determined whether the target vehicle needs to be avoided through the distance.

During an implementation, a camera and a radar may first be used to acquire target vehicle information of a target vehicle around the ego vehicle and lane line information of an ego lane. In some embodiments, the target vehicle information may include: a width of the target vehicle, a height of the target vehicle, a distance from a center point of the target vehicle to a center point of the ego vehicle, and a longitudinal distance from the target vehicle to the ego vehicle; the lane line information may include a lane line equation of the ego lane. The lane line equation may include a left lane line equation of the ego lane: $Y_L = A_0 + A_1 x + A_2 x^2 + A_3 x^3$, and a right lane line equation of the ego lane: $Y_R = A_0 + A_1 x + A_2 x^2 + A_3 x^3$, where $Y_L$ is a distance from a center point of the front axle of the ego vehicle to an inner edge of the left lane, $Y_R$ is a distance from the center point of the front axle of the ego vehicle to an inner edge of the right lane, $x$ is the longitudinal distance from the target vehicle to the ego vehicle, $A_0$ is a lateral distance from the center point of the front axle of the ego vehicle to a lane line on a side of the target vehicle, $A_1$ is an angle between a heading of the ego vehicle and the lane line on the side of the target vehicle, $A_2$ is a curvature of the lane line on the side of the target vehicle, $A_3$ is a rate of change in the curvature of the lane line.

In some embodiments, when a distance from an edge of a large vehicle to the inner edge of the ego lane (i.e., a distance from an edge of a target vehicle A to an inner edge of a lane of an ego vehicle B) is $L$, and $0 \leq L \leq L_0$, can a function of avoiding the large vehicle be triggered, where $L_0$ is a set threshold, which can be calibrated according to the height of the target vehicle. The higher the height of the target vehicle, the greater the psychological pressure on a driver of the ego vehicle when the target vehicle passes. In this case, avoidance is needed even if the large vehicle is relatively far away. Therefore, the higher the height of the target vehicle, the larger $L_0$ is.

To reduce avoidance determination errors caused by vehicle type recognition errors, it is also possible to only consider a vehicle as a target vehicle when the vehicle simultaneously satisfies a condition that a vehicle type is a large vehicle, and a width or a length of the target vehicle is greater than a certain value.

It should be noted that when the distance from the edge of the target vehicle to the inner edge of the lane line of the ego vehicle is greater than the set threshold, it is determined that the target vehicle does not need to be avoided; and when the distance from the edge of the target vehicle to the inner edge of the lane line of the ego vehicle is less than the set threshold, it is determined that the target vehicle needs to be avoided.

Before calculating the distance from the edge of the target vehicle to the inner edge of the lane line of the ego vehicle, it may also be determined whether a type of the ego lane is a straight lane or a curved lane.

If the type of the ego lane is a straight lane, and the target vehicle is in a left lane of the ego vehicle, then a horizontal distance $L_h$ from the edge of the target vehicle to the inner edge of the lane line of the ego vehicle is calculated according to the formula: $L_h = D - \dfrac{W}{2} - Y_L = D - \dfrac{W}{2} - (A_0 + A_1 S + A_2 S^2 + A_3 S^3)$, where D is the distance from the center point of the target vehicle to the center point of the ego vehicle, W is the width of the target vehicle, S is the longitudinal distance from the target vehicle to the ego vehicle, $Y_L$ is the distance from the center point of the front axle of the ego vehicle to the inner edge of the left lane.

If the type of the ego lane is a straight lane, and the target vehicle is in a right lane of the ego vehicle, then the horizontal distance $L_h$ from the edge of the target vehicle to the inner edge of the lane line of the ego vehicle is calculated according to the formula: $L_h = D - \dfrac{W}{2} - Y_R = D - \dfrac{W}{2} - (A_0 + A_1 S + A_2 S^2 + A_3 S^3)$.

If the type of the ego lane is a curved lane, then a vertical distance $L_v$ from the edge of the target vehicle to the inner edge of the lane line of the ego vehicle is calculated according to the formula: $L_v = \dfrac{L_h}{\cos(\arctan(A_1 + 2A_2 S + 3A_3 S^2))}$.

It should be noted that whether the type of the ego lane is a straight lane or a curved lane can be determined according to whether a value of $A_2/2$ is greater than or equal to 3000. If the type of the ego lane is a straight lane, i.e., $A_2/2$ is greater than or equal to 3000, then $L$ can be simplified as $L_h$; if the type of the ego lane is a curved lane, i.e., $A_2/2$ is less than 3000, then $L$ can be simplified as $L_v$. That is to say, if it is determined that the type of the ego lane is a straight lane, then $L = L_h$; if it is determined that the type of the ego lane is a curved lane, then $L = L_v$.

In step S102, when it is determined that the target vehicle needs to be avoided, a timing for the ego vehicle to avoid the target vehicle is calculated according to the distance, a height of the target vehicle and a relative speed between the target vehicle and the ego vehicle.

In some embodiments, by means of table lookup, an initial avoidance timing corresponding to the distance from the edge of the target vehicle to the inner edge of the lane line of the ego vehicle can be determined, a first correction coefficient for the initial avoidance timing corresponding to the relative speed between the target vehicle and the ego vehicle can be determined, and a second correction coefficient for the initial avoidance timing corresponding to the height of the target vehicle can be determined; and the timing for the ego vehicle to avoid the target vehicle can be calculated according to the initial avoidance timing, the first correction coefficient and the second correction coefficient.

It should be noted that the initial avoidance timing refers to a moment when the longitudinal distance from the target vehicle to the ego vehicle is equal to an initially set distance, and the timing for the ego vehicle to avoid the target vehicle refers to a moment when the longitudinal distance from the target vehicle to the ego vehicle is less than or equal to a target distance, where the target distance is calculated according to the initially set distance.

A correspondence between a distance L from the edge of the target vehicle to the inner edge of the lane line of the ego vehicle and an initial avoidance timing T can refer to Table 1 below.

Table 1

| Distance L | 0<L≤0.2m | 0.2m<L≤ 0.4m | 0.4<L≤0.6m | 0.6m<L≤0.8m | L>0.8m |
|---|---|---|---|---|---|
| Initial avoidance timing T | 1.2 times vehicle speed | 1.1 times vehicle speed | 1.0 times vehicle speed | 0.8 times vehicle speed | No trigger |

Taking the distance L within a range of 0<L≤0.2m and a speed of the ego vehicle being 100km/h as an example, the initially set distance is 1.2∗100/3.6≈33.3, and the initial avoidance timing is a moment when the longitudinal distance from the target vehicle to the ego vehicle is equal to 33.3m.

A correspondence between a relative speed V between the target vehicle and the ego vehicle and a first correction coefficient $P_1$ can refer to Table 2 below.

Table 2

| Relative speed V | V≤10km/h | 10km/h≤V ≤20km/h | 10km/h≤V≤ 20km/h | 20km/h≤V≤ 30km/h | V≥30km/h |
|---|---|---|---|---|---|
| First correction coefficient $P_1$ | 0.8 | 0.9 | 1.0 | 1.1 | 1.2 |

A correspondence between a height H of the target vehicle and a second correction coefficient $P_2$ can refer to Table 3 below.

Table 3

| Vehicle height H | H<3m | 3m≤H<3.5m | 3.5m≤H<4m | 4m≤H<4.5m | H≥5m |
|---|---|---|---|---|---|
| Second correction coefficient $P_2$ | 0.8 | 0.9 | 1.0 | 1.1 | 1.2 |

For the initial avoidance timing corresponding to each distance L, correction is performed using the relative speed and the vehicle height to obtain a final timing for the ego vehicle to avoid the target vehicle.

Taking the distance L within the range of 0<L≤0.2m, the ego vehicle speed being 100km/h, the relative speed V≤10km/h, and the vehicle height H<3m as an example, calculation by table lookup yields the initially set distance as 33.3m, the first correction coefficient $P_1$ as 0.8, and the second correction coefficient $P_2$ as 0.8, then the target distance is calculated as 33.3∗0.8∗0.8=21.312m. Therefore, a moment when the longitudinal distance from the target vehicle to the ego vehicle is less than or equal to 21.312m is a timing for the ego vehicle to avoid the target vehicle.

In step S103, a lateral distance for the ego vehicle to avoid the target vehicle is calculated based on a preset initial avoidance distance.

In some embodiments, by means of table lookup, a third correction coefficient for an initial avoidance distance corresponding to a road width of a road where the ego vehicle is located can be determined, a fourth correction coefficient for the initial avoidance distance corresponding to a speed of the ego vehicle can be determined, and a fifth correction coefficient for the initial avoidance distance corresponding to a road curvature radius range of the road where the ego vehicle is located can be determined. A sixth correction coefficient for the initial avoidance distance is determined according to whether there is a road edge on an adjacent lane on an avoidance side. A seventh correction coefficient for the initial avoidance distance is determined according to whether there is a VRU (Vulnerable Road User) or a vehicle on the adjacent lane on the avoidance side.

The lateral distance for the ego vehicle to avoid the target vehicle is calculated according to a product of the preset initial avoidance distance, the third correction coefficient, the fourth correction coefficient, the fifth correction coefficient, the sixth correction coefficient and the seventh correction coefficient.

To facilitate understanding, the following example is given. After determining the timing for the ego vehicle to avoid the target vehicle, the initial avoidance distance can also be determined. The initial avoidance distance can be calibrated according to a road condition, driving habits of a driver, and stability of the ego vehicle's centering control. In some embodiments, the initial avoidance distance can be $Y_0$=30cm.

A correspondence between a road width and a third correction coefficient $k_1$ can refer to Table 4 below.

Table 4

| Road width m | 3~3.5m | 3.5~4m | >4m |
|---|---|---|---|
| Third correction coefficient $k_1$ | 0.8 | 0.9 | 1 |

A correspondence between a vehicle speed and a fourth correction coefficient $k_2$ can refer to Table 5 below.

Table 5

| Vehicle speed/kph | <60 | 60~80 | 80~100 | 100~130 |
|---|---|---|---|---|
| Fourth correction coefficient $k_2$ | 1 | 0.9 | 0.8 | 0.6 |

A correspondence between a road curvature radius and a fifth correction coefficient $k_3$ can refer to Table 6 below.

Table 6

| Road curvature radius /cm | 1000~2000 | 2000~3000 | > 3000 |
|---|---|---|---|
| Fifth correction coefficient $k_3$ | 0.6 | 0.8 | 1 |

A correspondence between whether there is a road edge on the adjacent lane on the avoidance side and a sixth correction coefficient $k_4$ can refer to Table 6 below.

Table 6

| Whether there is a road edge on the adjacent lane on the avoidance side | Yes | No |
|---|---|---|
| Sixth correction coefficient $k_4$ | 0.6 | 1 |

A correspondence between whether there is a VRU or a vehicle on the adjacent lane on the avoidance side and a seventh correction coefficient $k_5$ can refer to Table 7 below.

Table 7

| Whether there is a VRU or a vehicle on the adjacent lane on the avoidance side | Yes | No |
|---|---|---|
| Correction coefficient $k_5$ | 0.6 | 1 |

The lateral distance $Y_1$ for the ego vehicle to avoid the target vehicle can be calculated according to the formula $Y_1 = Y_0*k_1*k_2*k_3*k_4*k_5$.

Step S104: Control the ego vehicle to perform intelligent avoidance according to the timing and the lateral distance for the ego vehicle to avoid the target vehicle.

It can be understood that, the ego vehicle can be controlled to perform avoidance according to the calculated timing and lateral distance for the ego vehicle to avoid the target vehicle.

In some embodiments, when the timing for the ego vehicle to avoid the target vehicle arrives, and the distance from the center point of the target vehicle to the center point of the ego vehicle is less than or equal to the calculated lateral distance, the ego vehicle is controlled to perform avoidance.

In some embodiments, during a process of avoiding the target vehicle, if it is determined that the target vehicle is not lost, then when a longitudinal distance from the target vehicle to the ego vehicle is greater than a first set distance, or a distance from the center point of the target vehicle to the center point of the ego vehicle is greater than a second set distance, the avoidance is ended.

If it is determined that the target vehicle is lost, then a longitudinal distance from the target vehicle to the ego vehicle is calculated according to a length of the ego vehicle, a speed of the ego vehicle, a length of the target vehicle, an average speed of the target vehicle, an average longitudinal distance from the target vehicle to the ego vehicle, and a predicted avoidance start-to-end time; if the longitudinal distance from the target vehicle to the ego vehicle is greater than or equal to the first set distance, then the avoidance is ended; otherwise, it is continued to control the vehicle to perform avoidance.

In some embodiments, if it is determined that the target vehicle is lost, then the longitudinal distance S from the target vehicle to the ego vehicle may be calculated according to the formula:

$$S = \int_0^{t=T} v_t d_t - v_{target} T - s_0 - \frac{L_{target}}{2} - L_{ego}$$ , where $v_t$ is the speed of the ego vehicle, $v_{target}$ is the average speed of the target vehicle within a preset duration before the target vehicle is lost, T is the predicted avoidance start-to-end time, $s_0$ is the average longitudinal distance from the target vehicle to the ego vehicle within the preset duration before the target vehicle is lost, $L_{target}$ is the length of the target vehicle, $L_{ego}$ is the length of the ego vehicle.

After the ego vehicle overtakes the target vehicle, two manners can be used to end the avoidance.

In some embodiments, if the system uses side corner radar(s) or side-view camera(s), and the side corner radar(s) or the side-view camera(s) can operate normally, and the target vehicle is not lost during the overtaking process, then after it is detected through the side corner radar(s) or the side-view camera(s) that the ego vehicle has overtaken the target vehicle by 15m (i.e., the longitudinal distance from the target vehicle to the ego vehicle is greater than 15m), an avoidance action is cancelled, or if it is detected that the target vehicle changes lanes away from the ego vehicle, and the distance from the center point of the target vehicle to the center point of the ego vehicle is greater than 5m, then the avoidance action is cancelled.

In other embodiments, if the system does not use side corner radar(s) and side-view camera(s), or the side corner radar(s) and the side-view camera(s) are unavailable, or the target vehicle is lost during the overtaking process, then the system enters predictive control, and the predictive control method is as follows.

To prevent control time from being too long due to errors in recognizing the target vehicle's speed and distance when the target vehicle enters a blind spot or is lost, speeds $v_1, v_2, v_3, v_4, v_5$ and longitudinal distances $s_1, s_2, s_3, s_4, s_5$ of the target vehicle within five cycles (e.g., 250ms) before the target vehicle is lost can be acquired, then a minimum value and a maximum value are respectively removed from five speeds and five longitudinal distances, and an average is calculated to correspondingly obtain an average speed $v_{target}$ of the target vehicle within a preset duration before the target vehicle is lost and an average longitudinal distance $s_0$ between the target vehicle and the ego vehicle within the preset duration before the target vehicle is lost.

The average speed of the target vehicle within the preset duration before the target vehicle is lost can be calculated according to the formula: $V_{target} = \dfrac{V_1 + V_2 + V_3 + V_4 + V_5 - min(V_1, V_2, V_3, V_4, V_5) - max\ (V_1, V_2, V_3, V_4, V_5)}{3}$ .

The average longitudinal distance from the target vehicle to the ego vehicle within the preset duration before the target vehicle is lost can be calculated according to the formula: $S_0 = \dfrac{S_1 + S_2 + S_3 + S_4 + S_5 - min(S_1, S_2, S_3, S_4, S_5) - max\ (S_1, S_2, S_3, S_4, S_5)}{3}$ .

Assuming that the length of the ego vehicle length is $L_{ego}$, and the length of the target vehicle is $L_{target}$, considering that the ego vehicle will accelerate and decelerate during the process of overtaking the target vehicle, a vehicle travelling distance needs to be calculated in real time. Assuming that the speed of the ego vehicle at time t is $v_t$, the predicted avoidance start-to-end time is T, it is predicted to cancel the avoidance action after the ego vehicle overtakes the target vehicle by 15m, and the speed of the target vehicle during the overtaking process is $v_{target}$, when the formula satisfies $S = \int_0^{t=T} v_t d_t - v_{target} T - s_0 - \dfrac{L_{target}}{2} - L_{ego} = 15$, it is considered that an avoidance end moment has been reached. If there is no target vehicle ahead of the ego vehicle that continues to require avoidance, then this avoidance ends immediately. After the avoidance ends, the ego vehicle returns to the center of the lane.

It can be understood that these two manners can make the determination of the timing for the ego vehicle to return to the center more accurate, avoiding the problem of returning to the center too early or too late.

Referring to FIG. 2, FIG. 2 shows a schematic diagram of a vehicle avoidance control apparatus according to some embodiments of the present disclosure. As shown in FIG. 2, the apparatus includes: a deciding module 201, configured to calculate a distance from an edge of a target vehicle to an inner edge of a lane line of an ego vehicle according to target vehicle information and lane line information, and determine whether the target vehicle needs to be avoided through the distance; a calculating module 202, configured to, when it is determined that the target vehicle needs to be avoided, calculate a timing for the ego vehicle to avoid the target vehicle according to the distance, a height of the target vehicle and a relative speed between the target vehicle and the ego vehicle; calculate a lateral distance for the ego vehicle to avoid the target vehicle based on a preset initial avoidance distance; and a control module 203, configured to control the ego vehicle to perform intelligent avoidance according to the timing and lateral distance for the ego vehicle to avoid the target vehicle.

In some embodiments, the apparatus further includes an acquiring module (not shown in the figure), configured to acquire target vehicle information of a target vehicle around the ego vehicle and lane line information of an ego lane by using a camera and a radar, where the target vehicle information includes a width of the target vehicle, a height of the target vehicle, a distance from a center point of the target vehicle to a center point of the ego vehicle, and a longitudinal distance from the target vehicle to the ego vehicle, and the lane line information includes a lane line equation of the ego lane.

In some embodiments, the calculating module 202 is further configured to determine a type of the ego lane; when it is determined that the type of the ego lane is a straight lane, calculate a horizontal distance from the edge of the target vehicle to the inner edge of the lane line of the ego vehicle according to a formula: $L_h = D - \dfrac{W}{2} - (A_{0+} A_1 S + A_2 S^2 + A_3 S^3)$ , where $L_h$ is the horizontal distance from the edge of the target vehicle to the inner edge of the lane line of the ego vehicle, D is the distance from the center point of the target vehicle to the center point of the ego vehicle, W is the width of the target vehicle, $A_0$ is a lateral distance from a center point of an front axle of the ego vehicle to a lane line on a side of the target vehicle, $A_1$ is an angle between a heading of the ego vehicle and the lane line on the side of the target vehicle, $A_2$ is a curvature of the lane line on the side of the target vehicle, $A_3$ is a rate of change in the curvature of the lane line, S is the longitudinal distance from the target vehicle to the ego vehicle; and when it is determined that the type of the ego lane is a curved lane, calculate a vertical distance from the edge of the target vehicle to the inner edge of the lane line of the ego vehicle according to a formula:

$$L_v = \frac{L_h}{\cos\left(arctan(A_1 + 2A_2 S + 3A_3 S^2)\right)},$$

where $L_v$ is the vertical distance from the edge of the target vehicle to the inner edge of the lane line of the ego vehicle.

In some embodiments, the calculating module 202 is further configured to determine an initial avoidance timing corresponding to the distance from the edge of the target vehicle to the inner edge of the lane line of the ego vehicle; determine a first correction coefficient for the initial avoidance timing corresponding to the relative speed between the target vehicle and the ego vehicle; determine a second correction coefficient for the initial avoidance timing corresponding to the height of the target vehicle; and calculate the timing for the ego vehicle to avoid the target vehicle according to the initial avoidance timing, the first correction coefficient and the second correction coefficient.

In some embodiments, the calculating module 202 is further configured to determine a third correction coefficient for an initial avoidance distance corresponding to a road width of a road where the ego vehicle is located; determine a fourth correction coefficient for the initial avoidance distance corresponding to a speed of the ego vehicle; determine a fifth correction coefficient for the initial avoidance distance corresponding to a road curvature radius of the road where the ego vehicle is located; determine a sixth correction coefficient for the initial avoidance distance according to whether there is a road edge on an adjacent lane on an avoidance side; determine a seventh correction coefficient for the initial avoidance distance according to whether there is a vulnerable road user (VRU) or a vehicle on the adjacent lane on the avoidance side; and calculate the lateral distance for the ego vehicle to avoid the target vehicle according to a product of the preset initial avoidance distance, the third correction coefficient, the fourth correction coefficient, the fifth correction coefficient, the sixth correction coefficient and the seventh correction coefficient.

In some embodiments, the control module 203 is further configured to, during a process of avoiding the target vehicle, if it is determined that the target vehicle is not lost, then when a longitudinal distance from the target vehicle to the ego vehicle is greater than a first set distance, or a distance from a center point of the target vehicle to a center point of the ego vehicle is greater than a second set distance, end the avoidance; if it is determined that the target vehicle is lost, then calculate a longitudinal distance from the target vehicle to the ego vehicle according to a length of the ego vehicle, a speed of the ego vehicle, a length of the target vehicle, an average speed of the target vehicle, an average longitudinal distance from the target vehicle to the ego vehicle, and a predicted avoidance start-to-end time; and if the longitudinal distance from the target vehicle to the ego vehicle is greater than or equal to the first set distance, then end the avoidance.

In some embodiments, the calculating module 202 is further configured to calculate the longitudinal distance from the target vehicle to the ego vehicle according to the formula:

$$S = \int_0^{t=T} v_t d_t - v_{target} T - s_0 - \frac{L_{target}}{2} - L_{ego},$$

where S is the longitudinal distance from the target vehicle to the ego vehicle, $v_t$ is the speed of the ego vehicle, $v_{target}$ is the average speed of the target vehicle within a preset duration before the target vehicle is lost, T is the predicted avoidance start-to-end time, $s_0$ is the average longitudinal distance from the target vehicle to the ego vehicle within the preset duration before the target vehicle is lost, $L_{target}$ is the length of the target vehicle, and $L_{ego}$ is the length of the ego vehicle.

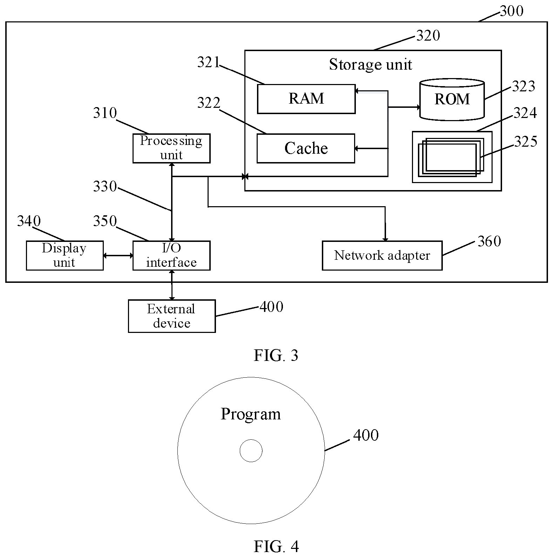

An electronic device 300 according to the implementation of the present disclosure is described below with reference to FIG. 3. The electronic device 300 shown in FIG. 3 is merely an example and should not impose any limitation on the functionality and use scope of the embodiments of the present disclosure.

As shown in FIG. 3, the electronic device 300 is expressed in a form of a general-purpose computing device. Components of the electronic device 300 may include, but are not limited to, at least one processing unit 310 as described above, at least one storage unit 320 as described above, and a bus 330 that connects different system components (including the storage unit 320 and the processing unit 310).

The storage unit stores program codes, and the program codes may be executed by the processing unit 310, causing the processing unit 310 to execute the steps of various exemplary implementations of the present disclosure described in the "embodiments of method" section of this specification.

The storage unit 320 may include a readable medium in a form of a volatile storage unit, such as a random access storage unit (RAM) 321 and/or a cache storage unit 322, and may further include a read-only storage unit (ROM) 323.

The storage unit 320 may also include a program/utility 324 having a set (at least one) of program modules 325. Such program modules 325 include, but are not limited to, an operating system, one or more application programs, other program modules, and program data. Each of these examples or some combination thereof may include an implementation of a network environment.

The bus 330 may represent one or more of several types of bus structures, including a memory bus or a memory controller, a peripheral bus, an accelerated graphics port, a processing unit, or a local bus using any of a variety of bus architectures.

The electronic device 300 may also communicate with one or more external devices (such as a keyboard, a pointing device, a Bluetooth device, etc.), and may also communicate with one or more devices that enable a user to interact with the electronic device 300, and/or with any device that enables the electronic device 300 to communicate with one or more other computing devices (such as a router, a modem, etc.). Such communication may occur via an input/output (I/O) interface 350. Moreover, the electronic device 300 may also communicate with one or more networks (such as a local area network (LAN), a wide area network (WAN) and/or a public network, such as the Internet) via a network adapter 360. As shown, the network adapter 360 communicates with other modules of the electronic device 300 via the bus 330. It should be understood that, although not shown, other hardware and/or software modules may be used in conjunction with the electronic device 300, including but not limited to, microcode, a device driver, a redundant processing unit, an external disk drive array, a RAID system, a tape drive, and a data backup storage system, etc.

Through the description of the above implementations, those skilled in the art will readily understand that the exemplary implementations described herein may be implemented by software, or by software in combination with necessary hardware. Therefore, the technical solutions according to the implementations of the present disclosure may be embodied in a form of a software product. The software product may be stored on a non-transitory storage medium (which may be a CD-ROM, a USB flash drive, a mobile hard drive, etc.) or on a network, including several instructions to cause a computing device (which may be a personal computer, a server, a terminal apparatus, or a network device, etc.) to execute the method according to the implementations of the present disclosure.

According to the solution of the present disclosure, a computer-readable storage medium is also provided, which has stored thereon a program product capable of implementing the method described above in this specification. In some possible implementations, various aspects of the present disclosure may also be implemented in a form of a program product, including program codes, when the program product runs on a terminal device, the program codes are used to cause the terminal device to execute the steps of various exemplary implementations of the present disclosure described in the "exemplary method" section of this specification.

Referring to FIG. 4, a program product 400 for implementing the above method according to an implementation of the present disclosure is described, which may employ a portable compact disc read-only memory (CD-ROM) and includes program codes, and may run on a terminal device, such as a personal computer. However, the program product of the present disclosure is not limited thereto. In this document, a readable storage medium may be any tangible medium that includes or stores a program, the program may be used by or in conjunction with an instruction execution system, apparatus, or device.

The program product may employ any combination of one or more readable media. A readable medium may be a readable signal medium or a readable storage medium. The readable storage medium may be, for example, but not limited to, an electrical, magnetic, optical, electromagnetic, infrared, or semiconductor system, apparatus, or device, or any combination of the above. More specific examples (a non-exhaustive list) of the readable storage medium include: an electrical connection having one or more wires, a portable disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing.

A computer-readable signal medium may include a propagated data signal in a baseband or as a part of a carrier wave, with readable program codes embodied therein. Such a propagated data signal may take many forms, including but not limited to an electromagnetic signal, an optical signal, or any suitable combination thereof. The readable signal medium may also be any readable medium that is not a readable storage medium and that can send, propagate, or transmit a program for use by or in connection with an instruction execution system, apparatus, or device.

Program codes embodied on the readable medium may be transmitted using any appropriate medium, including but not limited to wireless, wired, optical fiber cable, RF, etc., or any suitable combination of the foregoing.

Program codes for carrying out operations of the present disclosure may be written in any combination of one or more programming languages, including an object-oriented programming language such as Java, C++ or the like and conventional procedural programming languages, such as the "C" programming language or similar programming languages. The program codes may be executed entirely on a user computing device, partly on a user device, as a stand-alone software package, partly on a user computing device and partly on a remote computing device, or entirely on a remote computing device or server. In the scenario involving the remote computing device, the remote computing device may be connected to the user computing device through any type of network, including a local area network (LAN) or a wide area network (WAN), or may be connected to an external computing device (for example, through the Internet using an Internet service provider).

In addition, the drawings above are only schematic illustrations of the processes included in the method according to the exemplary embodiments of the present disclosure, and are not for limitation purposes. It is readily understood that processes shown in the drawings above do not indicate or limit the temporal sequence of these processes.

In addition, it is also readily understood that these processes may be executed synchronously or asynchronously, for example, in multiple modules.

The foregoing is only specific implementations of the present disclosure, enabling those skilled in the art to understand or implement the present disclosure. Various modifications to these embodiments will be apparent to those skilled in the art. The general principles defined herein may be implemented in other embodiments without departing from the spirit or scope of the present disclosure. Therefore, the present disclosure will not be limited to the embodiments shown herein but is to be accorded the widest scope consistent with the principles and novel features disclosed herein.

The present disclosure provides a vehicle avoidance control method and apparatus, a device and a storage medium, where the method includes steps: calculating, according to target vehicle information and lane line information, a distance from an edge of a target vehicle to an inner edge of a lane line of an ego vehicle, and determining whether the target vehicle needs to be avoided through the distance; when it is determined that the target vehicle needs to be avoided, calculating a timing for the ego vehicle to avoid the target vehicle according to the distance, a height of the target vehicle and a relative speed between the target vehicle and the ego vehicle; calculating a lateral distance for the ego vehicle to avoid the target vehicle based on a preset initial avoidance distance; controlling the ego vehicle to perform intelligent avoidance according to the timing and lateral distance for the ego vehicle to avoid the target vehicle. The present disclosure can adapt to different types of large vehicles and different road types, improve the accuracy of avoidance, and also reduce the number of driver takeovers.

The present disclosure is described with reference to flowcharts and/or block diagrams of methods, devices (systems), and computer program products according to embodiments of the present disclosure. It should be understood that each flow and/or block of the flowcharts and/or block diagrams, and combinations of flows and/or blocks in the flowcharts and/or block diagrams, can be implemented by computer program instructions. These computer program instructions may be provided to a processor of a general purpose computer, a special purpose computer, an embedded processor, or other programmable data processing device to produce a machine, such that the instructions, which execute via the processor of the computer or other programmable data processing device, create means for implementing the functions specified in one or more flows of the flowcharts and/or one or more blocks of the block diagrams.

## Claims

1.  A vehicle avoidance control method, comprising:

    calculating, according to target vehicle information and lane line information, a distance from an edge of a target vehicle to an inner edge of a lane line of an ego vehicle, and determining whether the target vehicle needs to be avoided through the distance;
    when it is determined that the target vehicle needs to be avoided, calculating, according to the distance, a height of the target vehicle and a relative speed between the target vehicle and the ego vehicle, a timing for the ego vehicle to avoid the target vehicle;
    calculating, based on a preset initial avoidance distance, a lateral distance for the ego vehicle to avoid the target vehicle; and
    controlling, according to the timing and the lateral distance for the ego vehicle to avoid the target vehicle, the ego vehicle to perform intelligent avoidance.

2.  The method according to claim 1, wherein before the calculating, according to the target vehicle information and the lane line information, the distance from the edge of the target vehicle to the inner edge of the lane line of the ego vehicle, further comprising:
    acquiring target vehicle information of the target vehicle around the ego vehicle and lane line information of an ego lane by using a camera and a radar, wherein the target vehicle information comprises a width of the target vehicle, a height of the target vehicle, a distance from a center point of the target vehicle to a center point of the ego vehicle, and a longitudinal distance from the target vehicle to the ego vehicle, and the lane line information comprises a lane line equation of the ego lane.

3.  The method according to claim 2, wherein the calculating, according to the target vehicle information and the lane line information, the distance from the edge of the target vehicle to the inner edge of the lane line of the ego vehicle, comprises:

    determining a type of the ego lane;
    when it is determined that the type of the ego lane is a straight lane, calculating, according to a formula

$$L_h = D - \frac{W}{2} - (A_{0+}A_1 S + A_2 S^2 + A_3 S^3)$$ , a horizontal distance from the edge of the target vehicle to the inner edge of the lane line of the ego vehicle, wherein $L_h$ is the horizontal distance from the edge of the target vehicle to the inner edge of the lane line of the ego vehicle, D is the distance from the center point of the target vehicle to the center point of the ego vehicle, W is the width of the target vehicle, $A_0$ is a lateral distance from a center point of a front axle of the ego vehicle to a lane line on a side of the target vehicle, $A_1$ is an angle between a heading of the ego vehicle and the lane line on the side of the target vehicle, $A_2$ is a curvature of the lane line on the side of the target vehicle, $A_3$ is a rate of change in the curvature of the lane line, S is the longitudinal distance from the target vehicle to the ego vehicle; and

when it is determined that the type of the ego lane is a curved lane, calculating, according to a formula $$L_v = \frac{L_h}{\cos(arctan(A_1 + 2A_2 S + 3A_3 S^2))}$$ , a vertical distance from the edge of the target vehicle to the inner edge of the lane line of the ego vehicle, wherein $L_v$ is the vertical distance from the edge of the target vehicle to the inner edge of the lane line of the ego vehicle.

4. The method according to claim 1, wherein the calculating, according to the distance, the height of the target vehicle and the relative speed between the target vehicle and the ego vehicle, the timing for the ego vehicle to avoid the target vehicle, comprises:

determining an initial avoidance timing corresponding to the distance from the edge of the target vehicle to the inner edge of the lane line of the ego vehicle;
determining a first correction coefficient for the initial avoidance timing corresponding to the relative speed between the target vehicle and the ego vehicle;
determining a second correction coefficient for the initial avoidance timing corresponding to the height of the target vehicle; and
calculating, according to the initial avoidance timing, the first correction coefficient and the second correction coefficient, the timing for the ego vehicle to avoid the target vehicle.

5. The method according to claim 1, wherein the calculating, based on the preset initial avoidance distance, the lateral distance for the ego vehicle to avoid the target vehicle, comprises:

determining a third correction coefficient for an initial avoidance distance corresponding to a road width of a road where the ego vehicle is located;
determining a fourth correction coefficient for the initial avoidance distance corresponding to a speed of the ego vehicle;
determining a fifth correction coefficient for the initial avoidance distance corresponding to a road curvature radius of the road where the ego vehicle is located;
determining, according to whether there is a road edge on an adjacent lane on an avoidance side, a sixth correction coefficient for the initial avoidance distance;
determining, according to whether there is a vulnerable road user (VRU) or a vehicle on the adjacent lane on the avoidance side, a seventh correction coefficient for the initial avoidance distance; and
calculating the lateral distance for the ego vehicle to avoid the target vehicle according to a product of the preset initial avoidance distance, the third correction coefficient, the fourth correction coefficient, the fifth correction coefficient, the sixth correction coefficient and the seventh correction coefficient.

6. The method according to claim 1, wherein after the controlling the ego vehicle to perform intelligent avoidance, further comprising:

during a process of avoiding the target vehicle, in a case that it is determined that the target vehicle is not lost, when a longitudinal distance from the target vehicle to the ego vehicle is greater than a first set distance, or a distance from a center point of the target vehicle to a center point of the ego vehicle is greater than a second set distance, ending the avoidance;
in a case that it is determined that the target vehicle is lost, calculating a longitudinal distance from the target vehicle to the ego vehicle according to a length of the ego vehicle, a speed of the ego vehicle, a length of the target vehicle, an average speed of the target vehicle, an average longitudinal distance from the target vehicle to the ego vehicle, and a predicted avoidance start-to-end time; and
when the longitudinal distance from the target vehicle to the ego vehicle is greater than or equal to the first set distance, ending the avoidance.

7. The method according to claim 6, wherein the calculating the longitudinal distance from the target vehicle to the ego vehicle according to the length of the ego vehicle, the speed of the ego vehicle, the length of the target vehicle, the average speed of the target vehicle, the average longitudinal distance from the target vehicle to the ego vehicle, and the predicted avoidance start-to-end time, comprises:

calculating, according to a formula $S = \int_0^{t=T} v_t d_t - v_{target} T - s_0 - \frac{L_{target}}{2} - L_{ego}$, the longitudinal distance from the target vehicle to the ego vehicle, wherein S is the longitudinal distance from the target vehicle to the ego vehicle, $v_t$ is the speed of the ego vehicle, $v_{target}$ is the average speed of the target vehicle within a preset duration before the target vehicle is lost, T is the predicted avoidance start-to-end time, $s_0$ is the average longitudinal distance from the target vehicle to the ego vehicle within the preset duration before the target vehicle is lost, $L_{target}$ is the length of the target vehicle, $L_{ego}$ is the length of the ego vehicle.

8. A vehicle avoidance control apparatus, comprising:

a deciding module, configured to, calculate, according to target vehicle information and lane line information, a distance from an edge of a target vehicle to an inner edge of a lane line of an ego vehicle, and determine whether the target vehicle needs to be avoided through the distance;
a calculating module, configured to, when it is determined that the target vehicle needs to be avoided, calculate a timing for the ego vehicle to avoid the target vehicle according to the distance, a height of the target vehicle and a relative speed between the target vehicle and the ego vehicle;
calculate, based on a preset initial avoidance distance, a lateral distance for the ego vehicle to avoid the target vehicle; and
a control module, configured to, control the ego vehicle to perform intelligent avoidance according to the timing and the lateral distance for the ego vehicle to avoid the target vehicle.

9. An electronic device, comprising:

a processor; and
a memory, storing computer-readable instructions thereon, wherein the computer-readable instructions, when executed by the processor, cause the processor to implement steps of the method according to any one of claims 1 to 7.

10. A computer-readable storage medium, storing computer program instructions, wherein when the computer program instructions are executed by a computer, the computer is caused to execute steps of the method according to any one of claims 1 to 7.

Calculate, according to target vehicle information and lane line information, a distance from an edge of a target vehicle to an inner edge of a lane line of an ego vehicle, and determine whether the target vehicle needs to be avoided through the distance ⟋— Step S101

When it is determined that the target vehicle needs to be avoided, calculate a timing for the ego vehicle to avoid the target vehicle according to the distance, a height of the target vehicle and a relative speed between the target vehicle and the ego vehicle ⟋— Step S102

Calculate, based on a preset initial avoidance distance, a lateral distance for the ego vehicle to avoid the target vehicle ⟋— Step S103

Control, according to the timing and the lateral distance for the ego vehicle to avoid the target vehicle, the ego vehicle to perform intelligent avoidance ⟋— Step S104

FIG. 1

⟋— 201    ⟋— 202    ⟋— 203

| Deciding module | Calculating module | Control module |

FIG. 2

FIG. 3

FIG. 4

## INTERNATIONAL SEARCH REPORT

| | International application No. |
|---|---|
| | **PCT/CN2023/143393** |

| A. | CLASSIFICATION OF SUBJECT MATTER |
|---|---|

B60W30/09(2012.01)i; B60W30/10(2006.01)i; B60W30/12(2020.01)i; B60W30/095(2012.01)i; B60W30/16(2020.01)i; G08G1/16(2006.01)i; G08G1/052(2006.01)i

According to International Patent Classification (IPC) or to both national classification and IPC

| B. | FIELDS SEARCHED |
|---|---|

Minimum documentation searched (classification system followed by classification symbols)

IPC: B60W G08G

Documentation searched other than minimum documentation to the extent that such documents are included in the fields searched

Electronic data base consulted during the international search (name of data base and, where practicable, search terms used)

CNABS; CNTXT; VEN; CNKI; WPABS; ENTXT: 避让, 大车, 压线, 压迫感, 用户体验, 安全感, 车道线, 尺寸, 高度, 宽度, 白线, 车道标志, 行车线, 边界, 超车, 距离, 移动, 横向, vehicle, offset, press, lane, line, large, safety, user experience

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 117125056 A (VOYAH AUTOMOBILE TECHNOLOGY CO., LTD.) 28 November 2023 (2023-11-28) <br> claims 1-10 | 1-10 |
| X | CN 115214657 A (CHANG'AN UNIVERSITY et al.) 21 October 2022 (2022-10-21) <br> description, paragraphs [0005]-[0036], and figure 1 | 1, 2, 8-10 |
| X | CN 116588091 A (CHONGQING CHANGAN AUTOMOBILE CO., LTD.) 15 August 2023 (2023-08-15) <br> description, paragraphs [0005]-[0106], and figures 1-5 | 1, 2, 8-10 |
| X | CN 112277939 A (CHONGQING CHANGAN AUTOMOBILE CO., LTD.) 29 January 2021 (2021-01-29) <br> description, paragraphs [0004]-[0063], and figures 1 and 2 | 1, 2, 8-10 |
| A | CN 115547102 A (BEIJING CO WHEELS TECHNOLOGY CO., LTD.) 30 December 2022 (2022-12-30) <br> entire document | 1-10 |

☑ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **25 April 2024** | **03 May 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2023/143393** |

| C. | DOCUMENTS CONSIDERED TO BE RELEVANT | |
|---|---|---|
| Category* | Citation of document, with indication, where appropriate, of the relevant passages | Relevant to claim No. |
| A | CN 115571162 A (CHONGQING CHANGAN AUTOMOBILE CO., LTD.) 06 January 2023 (2023-01-06) entire document | 1-10 |
| A | CN 115107756 A (CHONGQING CHANGAN AUTOMOBILE CO., LTD.) 27 September 2022 (2022-09-27) entire document | 1-10 |
| A | CN 116476808 A (DONGFENG MOTOR GROUP CO., LTD.) 25 July 2023 (2023-07-25) entire document | 1-10 |
| A | WO 2020173771 A1 (VOLKSWAGEN AG) 03 September 2020 (2020-09-03) entire document | 1-10 |

Form PCT/ISA/210 (second sheet) (July 2022)

# EP 4 786 293 A1

## INTERNATIONAL SEARCH REPORT
### Information on patent family members

International application No.

**PCT/CN2023/143393**

| Patent document cited in search report | | | Publication date (day/month/year) | Patent family member(s) | | | Publication date (day/month/year) |
|---|---|---|---|---|---|---|---|
| CN | 117125056 | A | 28 November 2023 | None | | | |
| CN | 115214657 | A | 21 October 2022 | None | | | |
| CN | 116588091 | A | 15 August 2023 | None | | | |
| CN | 112277939 | A | 29 January 2021 | None | | | |
| CN | 115547102 | A | 30 December 2022 | None | | | |
| CN | 115571162 | A | 06 January 2023 | None | | | |
| CN | 115107756 | A | 27 September 2022 | None | | | |
| CN | 116476808 | A | 25 July 2023 | None | | | |
| WO | 2020173771 | A1 | 03 September 2020 | EP | 3931030 | A1 | 05 January 2022 |
| | | | | EP | 3931030 | B1 | 14 February 2024 |
| | | | | DE | 102019202583 | A1 | 27 August 2020 |

Form PCT/ISA/210 (patent family annex) (July 2022)

**17**

**REFERENCES CITED IN THE DESCRIPTION**

**Patent documents cited in the description**

- CN 202311277440